# EUROPEAN PATENT APPLICATION

(11) **EP 1 285 937 A2**
(43) Date of publication of application: **26.02.2003**
(21) Application number: 02255774.8
(22) Date of filing: 20.08.2002
(51) Int. Cl.: C08G 18/42, C08G 18/80, C09D 175/06

(54) **Water based intercoat coating composition and multi-layer coating film-forming method by use of the same**

(30) Priority: 20.08.2001 JP 2001249099; 11.12.2001 JP 2001377633; 24.06.2002 JP 2002182987
(71) Applicant: Kansai Paint Co., Ltd, Amagasaki-shi, Hyogo-ken 661-0964 (JP)
(72) Inventor: Katsuta, Hideaki, Kansai Paint Co., Ltd, Hiratsuka-shi, Kanagawa-ken 254-0016 (JP); Okazaki, Shuichi, Kansai Paint Co., Ltd, Hiratsuka-shi, Kanagawa-ken 254-0016 (JP); Mizutani, Yutaka, Kansai Paint Co., Ltd, Hiratsuka-shi, Kanagawa-ken 254-0016 (JP)
(74) Representative: Stuart, Ian Alexander

(57) **Abstract**

A water based intercoat coating composition containing (A) a polyester resin comprising, as essential components, an alicyclic polybasic acid (a₁) and/or an alicyclic polyhydric alcohol (a₂), other polybasic acid (a₃) and other polyhydric alcohol (a₄), (B) a blocked polyisocyanate curing agent, and preferably (c) a water-dispersible blocked polyisocyanate curing agent.

## Description

### (1) Field of the Invention:

The present invention relates to a water based intercoat coating composition. Preferred embodiments may show excellent properties in a low solvent content or a low volatile organic compound content and in coating composition stability and capable of forming a coating film showing an excellent anti-chipping properties. The invention also relates to a multi-layer coating film-forming method by use of the water based intercoat coating composition.

### (2) Description of Background

The automobile body is usually coated with a multi-layer coating film comprising an undercoat coating film with an electrodeposition coating composition, an intercoat coating film and a topcoating film for the purpose of imparting anti-corrosive properties and good appearance. While an automobile is running, pebbles, gravels, antifreezing agents, ice bumps, etc. on the road may be wound up so as to collide against the automobile body, resulting in drawbacks of making mars on the multi-layer coating film, locally braking and peeling off the multi-layer coating film, showing poor appearance, exposing a metal substrate, developing rusts for corrosion (these drawbacks may be called as "chipping" hereinafter).

For the purpose of forming the above multi-layer coating film, a coating composition containing a hydroxyl group-containing polyester resin and a melamine resin has been used as an intercoat coating composition in the art with the result that prevention of chipping is difficult.

On the other hand, a coating composition using an organic solvent has mainly been used in the art. Since the use of the organic solvent may have possibility of danger of fire, influences on user's health, and recently influences particularly on environment, a coating composition using a safe and harmless solvent is demanded in the art.

Consequently, the use of a water based coating composition for use in the automobile has been advanced, and developments of a water based intercoat coating composition as an intercoat coating composition used in the automobile and requiring anti-chipping properties have been made.

Japanese Patent Application Laid-Open No. 209066/96 discloses a water based intercoat coating composition by use of a blocked isocyanate such as an aliphatic polyisocyanate oligomer, adduct of the oligomer, adduct of aliphatic polyisocyanate and the like, for the purpose of improving anti-chipping properties.

U.S. Patent No. 5455297 discloses a water based coating composition using an aqueous isocyanate.

Some water based intercoat coating compositions use a mixture of water with a water-soluble organic solvent as a solvent from the standpoints of coating composition stability and coating workability, wherein an amount of the water-soluble organic solvent is desired to be reduced to a minimum.

Recently, a prior art reference (see Coating and Coating Composition, October, 2000, pages 16 - 27, Trend of Water Based Polyurethane Resin) reports on reduction of an amount of an organic solvent in the coating composition or reduction of volatile organic compound (VOC), as well as anti-chipping properties.

Reduction of the volatile organic compound or a volatile solvent in the water based intercoat coating composition is strongly demanded, and developments of a water based intercoat coating composition capable of providing improved anti-chipping properties are demanded. However, simple combinations of the above prior art would be impossible to develop a coating composition well balanced in anti-chipping properties, low volatile organic compound content, water resistance and coating composition stability.

### Summary of the Invention:

Preferred embodiments of the present invention may provide a water based intercoat coating composition used in forming a multi-layer coating film showing excellent properties in anti-chipping properties, adhesion properties and water resistance, and a method of forming the multi-layer coating film; and/or may provide a water based coating composition having a high solid content, low volatile organic compound content and excellent storage stability, and used for forming a multi-layer coating film showing excellent properties in anti-chipping properties and water resistance.

The present inventors made intensive studies to find out firstly that a multi-layer coating film formed by use of a water based intercoat coating composition containing (A) a polyester resin comprising, as essential components, an alicyclic polybasic acid (a₁) and/or an alicyclic polyhydric alcohol (a₂), other polybasic acid (a₃) and other polyhydric alcohol (a₄), and (B) a blocked polyisocyanate curing agent may show excellent properties in anti-chipping properties, adhesion properties and water resistance, and secondly that a water based intercoat coating composition containing (A) a polyester resin comprising, as essential components, an alicyclic polybasic acid (a₁), an alicyolic polyhydric alcohol (a₂), other polybasic acid (a₃) and other polyhydric alcohol (a₄), (B) a blocked polyisocyanate curing agent, and (C) a water-dispersible blocked polyisocyanate curing agent may show a high solid content, low volatile organic compound content and excellent storage stability, and a multi-layer coating film formed by use of the above water based intercoat coating composition shows excellent properties in anti-chipping properties and water resistance, resulting in accomplishing the present invention.

That is, the present invention firstly provides a water based intercoat coating composition containing (A) a polyester resin comprising, as essential components, an alicyclic polybasic acid (a₁) and/or an alicyclic polyhydric alcohol (a₂), other polybasic acid (a₃) and other polyhydric alcohol (a₄), and (B) a blocked polyisocyanate curing agent.

The present invention secondly provides a water based intercoat coating composition containing (A) a polyester resin comprising, as essential components, an alicyclic polybasic acid (a₁) and/or an alicyclic polyhydric alcohol (a₂), other polybasic acid (a₃) and other polyhydric alcohol (a₄), (B) a blocked polyisocyanate curing agent, and (C) a water-dispersible blocked polyisocyanate curing agent.

The present invention thirdly provides a multi-layer coating film-forming method which comprises successively coating a cationic electrodeposition coating composition onto a substrate, coating the above water based intercoat coating composition, curing or not curing, and coating a topcoating composition to form at least one topcoat coating film layer.

### Detailed Description of the Invention:

The water based intercoat coating composition of the present invention and the multi-layer coating film-forming method of the present invention are explained more in detail hereinafter.

The water-based intercoat coating composition of the present invention is obtained firstly by dispersing into water the polyester resin (A) comprising, as essential components, the alicyclic polybasic acid (a₁) and/or the alicyclic polyhydric alcohol (a₂), other polybasic acid (a₃) and other polyhydric alcohol (a₄), and the blocked polyisocyanate curing agent (B).

The water based intercoat coating composition of the present invention is obtained secondly by dispersing the polyester resin (A) comprising, as essential components, the alicyclic polybasic acid (a₁), the alicyclic polyhydric alcohol (a₂), other polybasic acid (a₃) and other polyhydric alcohol (a₄), the blocked polyisocyanate curing agent (B) and the water-dispersible blocked polyisocyanate curing agent (C).

The polyester resin (A) is a polyester resin comprising, as essential components, the alicyclic polybasic acid (a₁), the alicyclic polyhydric alcohol (a₂), other polybasic acid (a₃) and other polyhydric alcohol (a₄).

The alicyclic polybasic acid (a₁) is a compound having at least one alicyclic structure mainly of 4 to 6-membered rings, and at least two carboxyl groups in one molecule, and may include, for example, cyclohexane-1,3-dicarboxylic acid, cyclohexane-1,4-dicarboxylic acid, hexahydrophthalic acid, hexahydroisophthalic acid, hexahydroterephthalic acid, hexahydrotrimellitic acid, methylhexahydrophthalic acid, anhydrides thereof, and the like.

The other polybasic acid (a₃) is a compound having at least two carboxyl groups in one molecule, for example, may include phthalic acid, isophthalic acid, terephthalic acid, naphthalene dicarboxylic acid, 4,4-diphenyldicarboxylic acid, diphenylmethane-4,4'-dicarboxylic acid, succinic acid, adipic acid, azelaic acid, sebacic acid, chlorendic (HET) acid, maleic acid, fumaric acid, itaconic acid, trimellitic acid, pyromellitic acid, anhydrides thereof, and the like.

The alicyclic polyhydric alcohol (a₂) is a compound having at least one alicyclic structure mainly of 4 to 6-membered rings and at least two hydroxyl groups in one molecule, and may include, for example, 1,3-cyclohexanedimethanol, 1, 4-cyclohexanedimethanol, tricyclodecanedimethanol, hydrogenated bisphenol A, hydrogenated bisphenol F, spiro-glycol, dihydroxymethyltricyclodecane, and the like.

Of the other polyhydric alcohol (a₄), the polyhydric alcohol having two hydroxyl groups in one molecule may include, for example, glycols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1, 4-pentanediol, 2, 4-pentanediol, 2,3-dimethyltrimethylene glycol, tetramethylene glycol, 3-methyl-4,5-pentanediol, 2,2,4-trimethyl-1,3-pentanediol, 1,6-hexanediol, 1,5-hexanediol, 1,4-hexanediol, 2, 5-hexanediol, neopentyl glycol, hydroxypivalic acid, neopentyl glycol ester and the like; polylactonediol obtained by addition of lactones such as ε-caprolactone and the like to the above glycols, polyester diols such as bis(hydroxyethyl)terephthalate and the like.

Of the other polyhydric alcohol (a₄), the polyhydric alcohol having three hydroxyl groups in one molecule may include, for example, glycerin, trimethylolpropane, trimethylolethane, diglycerin, triglycerin, 1,2,6-hexanetriol, pentaerythritol, dipentaerythritol, sorbitol, mannitol, and the like.

A content of the alicyclic polybasic acid (a₁) and/or the alicyclic polyhydric alcohol (a₂) in the polyester resin (A) is in the range of 20 to 70% by weight, preferably 30 to 60% by weight based on a total solid content of monomers constituting the polyester resin (A).

A content less than 20% by weight of the alicyclic polybasic acid (a₁) and/or the alicyclic polyhydric alcohol (a₂) is ineffective on improvement in anti-chipping properties. A content more than 70% by weight may reduce weather resistance.

The polyester resin (A) obtained by reacting the alicyclic polybasic acid (a₁), other polybasic acid (a₃), the alicyclic polyhydric alcohol (a₂) and other polyhydric alcohol (a₄) has a weight average molecular weight in the range of 1,000 to 1000,000, preferably 2,000 to 10,000, a hydroxyl value in the range of 30 to 200 mgKOH/g, preferably 50 to 180 mgKOH/g, and an acid value in the range of 5 to 100 mgKOH/g, preferably 10 to 60 mgKOH/g.

### Blocked Polyisocyanate Curing Agent (B):

The curing agent (B) used as a crosslinking component is obtained by blocking an isocyanate group of a polyisocyanate (b₁) having at least two free isocyanate groups in one molecule with a blocking agent (b₂).

The polyisocyanate (b₁) in the blocked polyisocyanate curing agent (B) may include, for example, aliphatic polyisocyanates such as hexamethylene diisocyanate, trimethylhexamethylene diisocyanate, dimer acid diisocyanate, lysine diisocyanate, and the like; biuret type adducts of the above polyisocyanate, isocyanuric type adducts, and the like; alicyclic diisocyanates such as isophorone diisocyanate, 4,4'-methylenebis(cyclohexylisocyanate), methylcyclohexane-2,4- (or -2,6-) diisocyanate, 1,3- (or 1,4-) di(isocyanatomethyl)cyclohexane, 1, 4-cyclohexane diisocyanate, 1,3-cyclopentane diisocyanate, 1,2-cyclohexane diisocyanate and the like; biuret type adducts of the above polyisocyanate, isocyanuric ring type adducts; aromatic diisocyanate compounds such as xylylene diisocyanate, metaxylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4'-toluidine diisocyanate, 4,4'-diphenyl ether diisocyanate, (m-or p-) phenylene diisocyanate, 4,4'-biphenylene diisocyanate, 3,3'-dimethyl-4,4'-biphenylene diisocyanate, bis(4-isocyanatophenyl) sulfone, isopropylidenebis(4-phenylisocyanate) and the like; biuret type adducts of the above polyisocyanates, isocyanuric type ring adducts; polyisocyanates having at least three isocyanate groups in one molecule, for example, triphenylmethane-4,4'-triisocyanate, 1,3,5-triisocyanatobenzene, 2,4,6-triisocyanatotoluene, 4,4'-dimethyldiphenylmethane-2,2',5,5'-tetraisocyanate and the like; biuret type adducts of the above polyisocyanates, isocyanuric type ring adducts; urethanized adducts obtained by reacting a polyisocyanate compound with a polyol such as ethylene glycol, propylene glycol, 1,4-butylene glycol, dimethylolpropionic acid, polyalkylene glycol, trimethylolpropane, hexanetriol and the like in an excess amount of isocyanate group to hydroxyl group of the polyol; biuret type adducts of the above polyisocyanates, isocyanuric type ring adducts; and the like.

Heating of the blocking agent (b₂) used to block a free isocyanate group at 100°C or higher, preferably 130°C or higher makes it possible to easily react with hydroxyl group.

Examples of the blocking agent (b₂) may include, for example, phenols such as phenol, cresol, xylenol, nitrophenol, ethylphenol, hydroxydiphenyl, butylphenol, isopropylphenol, nonylphenol, octylphenol, methyl hydroxybenzoate, and the like; lactams such as ε-caprolactam, δ-valerolactam, γ-butylolactam, β-propiolactam, and the like; aliphatic alcohols such as methanol, ethanol, propyl alcohol, butyl alcohol, amyl alcohol, lauryl alcohol and the like; ethers such as ethylene glycol monomethyl ether; ethylene glycol monoethyl ether, ethylene glycol monobutyl ether, diethylene glycol monomethyl ether, diethylene glycol monoethyl ether, propylene glycol monomethyl ether, methoxymethanol and the like; benzyl alcohol; glicolic acid; glycolates such as methyl glycolate, ethyl glycolate, butyl glycolate and the like; lactic acid, lactates such as methyl lactate, ethyl lactate, butyl lactate and the like; alcohols such as methylol urea, methylol melamine, diacetone alcohol, 2-hydroxyethyl acrylate, 2-hydroxyethyl methacrylate and the like; oximes such as formamideoxime, acetamideoxime, acetoxime, methylethylketooxime, diacetylmonooxime, benzophenoneoxime, cyclohexaneoxime and the like; active methylens such as dimethyl malonate, diethyl malonate, ethyl acetoacetate, methyl acetoacetate, acetylacetone and the like; mercaptans such as butylmercaptan, t-butylmercaptan, hexylmercaptan, t-dodecylmercaptan, 2-mercaptobenzothiazole, thiophenol, methylthiophenyl, ethylthiophenyl and the like; acid amides such as acetanilide, acetanisizide, acettoluide, acrylamide, methacrylamide, acetic acid amide, stearic acid amide, benzamide and the like; imides such as succinic acid imide, phthalic acid imide, maleic acid imide and the like; amines such as diphenylamine, phenylnaphthylamine, xylidine, N-phenylxylidine, carbazole, aniline, naphthylamine, butylamine, dibutylamine, butylphenylamine and the like; imidazoles such as imidazole, 2-ethylimidazole and the like; pyrazoles such as 3,5-dimethylpyrazole and the like; ureas such as urea, thiourea, ethyleneurea, ethylenethiourea, diphenylurea and the like; carbamates such as phenyl N-phenylcarbamate and the like; imines such as ethyleneimine, propyleneimine and the like; sulfites such as sodium bisulfite, potassium bisulfite; and the like.

The blocked polyisocyanate curing agent (B) is such that a ratio of isocyanate group (NCO) in the blocked polyisocyanate curing agent (B) to hydroxyl group (OH) in the polyester resin (A) is preferably in the range of 1.0 to 1.4.

### Water-Dispersible Blocked Polyisocyanate Curing Agent (C) :

The curing agent (C) is a blocked polyisocyanate prepared by blocking an isocyanate group of a polyisocyanate (c₁) with a blocking agent (c₂) and hydroxymonocarboxylic acids (c₃), followed by neutralizing the carboxyl group of the hydroxymonocarboxylic acids (c₃) to impart water-dispersibility.

The polyisocyanate (c₁) may include the polyisocyanate (b₁) as exemplified in the blocked polyisocyanate curing agent (B), and preferably may include hexamethylene diisocyanate (HMDI), derivatives of hexamethylene diisocyanate (HMDI), isophorone diisocyanate (IPDI), and derivatives of isophorone diisocyanate.

In the preparation of the water-dispersible blocked polyisocyanate curing agent (C), the isocyanate group of the polyisocyanate (c₁) is blocked with the blocking agent (c₂), and reacted with the hydroxymonocarboxylic acids (c₃), so that addition of at least one isocyanate group of the polyisocyanate (c₁) to the hydroxyl group of the hydroxymonocarboxylic acids (c₃) may take place.

The blocking agent (c₂) may include the blocking agent (b₂) as exemplified in the blocked polyisocyanate curing agent (B). The hydroxymonocarboxylic acids (c₃) may include 2-hydroxyacetic acid, 2-hydroxypropanoic acid, 1,2-hydroxy-9-octadecanoic acid (ricinoleic acid), 3-hydroxy-2,2-dimethylpropanoic acid (hydroxypivalic acid), dimethylolpropionic acid (DMPA) and the like. Of these, 3-hydroxy-2,2-dimethylpropanoic acid (hydroxypivalic acid) is preferable. The solvent used in the reaction may include ones non-reactive with isocyanate group, and, for example, ketones such as acetone, methyl ethyl ketone and the like, esters such as ethylacetate and the like, and N-methylpyrrolidone.

A composition of the water based intercoat coating composition in the present invention is such that a mixing ratio of the blocked polyisocyanate curing agent (B) and the water-dispersible blocked polyisocyanate curing agent (C) with the polyester resin (A) is not particularly limited, but the polyester resin (A) is in the range of 20 to 80%, particularly 40 to 70%, and a total amount of the curing agent (B) and the curing agent (C) is in the range of 80 to 20%, particularly 60 to 30% based on the weight of the solid content respectively.

A composition as a ratio of functional groups is such that a ratio of the isocyanate group (NCO) of the blocked polyisocyanate curing agent (B) and the water-dispersible blocked polyisocyanate curing agent (C) to the hydroxyl group (OH) is preferably in the range of 1.0 to 1.4.

A mixing ratio of the water-dispersible blocked polyisocyanate curing agent (C) to the blocked polyisocyanate curing agent (B) is in the range of 1:10 to 10:1, preferably 1:4 to 4:1, more preferably 1:2 to 2:1. A mixing ratio outside the above range may reduce properties of the water based intercoat coating composition in high solid content properties or low volatile organic compound content properties, storage stability, etc.

Formulation may preferably be carried out by mixing the blocked polyisocyanate curing agent (B) with the water-dispersible blocked polyisocyanate curing agent (C), followed by adding the polyester resin (A), because an inclusion of the curing agent (B) free of a water-dispersible group into the water-dispersible curing agent (C) may improve water-dispersibility and compatibility with the polyester resin (A), resulting in that dilution with water after neutralization may make it possible to obtain an optimum viscosity for coating at a solid content higher than in the art.

A melamine resin may be used as a curing agent in combination with the above curing agents. The melamine resin may include a methylol amino resin obtained by reacting melamine with an aldehyde. The aldehyde may include formaldehyde, paraformaldehyde, acetaldehyde, benzaldehyde and the like. The above melamine resin may also include ones obtained by etherifying a part or all of the methylol group in the methylol amino resin with a monoalcohol. The monoalcohol used in etherification may include methyl alcohol, ethyl alcohol, n-propyl alcohol, i-propyl alcohol, n-butyl alcohol, i-butyl alcohol, 2-ethyl butanol, 2-ethyl hexanol and the like.

The melamine may preferably include such a melamine that at least three methylol groups on an average per one triazine nucleus are methyl etherified, and a hydrophilic melamine which is such a melamine resin that a part of the methoxy group obtained as above is substituted with a monoalcohol having 2 or more carbon atoms, and which further has an imino group, an average degree of condensation of about 2 or less, and about 50% by weight of a melamine having one triazine nucleus.

### Vinyl Resin Particle (D) Having Different Glass Transition Temperatures Between Core Moiety and Shell Moiety:

The water based intercoat coating composition of the present invention may contain a vinyl resin particle (D) having different glass transition temperatures between a core moiety and a shell moiety in addition to the polyester resin (A) and the blocked polyisocyanate curing agent (B), or to the polyester resin (A), the blocked polyisocyanate curing agent (B) and the water-dispersible blocked polyisocyanate curing agent (C). The fine particle (D) is a particle having such a core-shell type multi-layer structure that a shell moiety is formed around a core moiety, and both core and shell moieties are preferably composed of a vinyl resin obtained by polymerization of a vinyl monomer.

It is necessary that a glass transition temperature (Tg) of the core moiety in the vinyl resin particle is different from that of the shell moiety. Specifically, a Tg of the core moiety is in the range of -80 to 0°C, particularly -60 to -20°C, and a Tg of the shell moiety is in the range of 40 to 120°C, particularly 80 to 110°C. Control of the Tg may easily be carried out by a composition and proportion of the vinyl monomer.

The vinyl monomer used for forming the vinyl resin particle (D) composed of the core moiety and the shell moiety is a compound having at least one polymerizable unsaturated bond in one molecule, and may include, without particular limitations, monomers as exemplified as follows.
① C₁₋₂₀ alkyl (meth)acrylate such as methyl (meth)acrylate, ethyl (meth)acrylate, propyl (meth)acrylate, butyl (meth)acrylate, 2-ethylhexyl (meth)acrylate, lauryl (meth)acrylate and the like,
② vinyl ester such as vinyl acetate, vinyl propionate and the like,
③ vinyl halide or vinylidene halide such as vinyl chloride, vinyl fluoride, vinylidene chloride, vinylidene fluoride and the like,
④ nitrogen-containing vinyl monomer such as (meth)acrylonitrile, (meth)acrylamide, methylol (meth)acrylamide and the like,
⑤ aromatic vinyl monomer such as styrene, α-methylstyrene, vinyl toluene and the like,
⑥ C₂₋₈ hydroxyalkyl ester of (meth)acrylic acid such as hydroxyethyl (meth)acrylate, hydroxypropyl (meth)acrylate, hydroxybutyl (meth)acrylate, and the like; monoesters of polyether polyol such as polyethylene glycol, polypropylene glycol, polybutylene glycol and the like with an unsaturated carboxylic acid such as (meth)acrylic acid and the like, monoethers of polyether polyol such as polyethylene glycol, polypropylene glycol, polybutylene glycol and the like with a hydroxyl group-containing unsaturated monomer such as hydroxyethyl (meth)acrylate and the like, adducts of α,β-unsaturated carboxylic acid with a monoepoxy compound such as Cardura E10 (trade name, marketed by Shell Japan Ltd.), α-olefinepoxide and the like; adducts of glycidyl (meth)acrylate with a monobasic acid such as acetic acid, propionic acid, p-t-butylbenzoic acid, fatty acids and the like; monoesterified products or diesterified products of acid anhydride group-containing unsaturated monomer with glycols such as ethylene glycol, 1,6-hexane glycol, neopentyl glycol and the like, for example, 1,6-hexanediol diacrylate; hydroxyalkyl vinyl ethers such as hydroxyethyl vinyl ether and the like; chlorine and hydroxyl group-containing vinyl monomer such as 3-chloro-2-hydroxypropyl (meth)acrylate and the like; hydroxyl group-containing vinyl monomer such as allyl alcohol and the like,
⑦ carboxyl group-containing vinyl monomer such as (meth)acrylic acid, phthalic acid (for example, divinylbenzene diallyl phthalate), maleic acid and the like,
⑧ diene monomer such as butadiene, isoprene and the like.

The vinyl resin particle (D) composed of the core moiety and the shell moiety may be prepared by subjecting the above vinyl monomer to an emulsion polymerization or a suspension polymerization, and is a fine particle having a particle size in the range of 50 to 1000 nm, particularly 80 to 700 nm.

A content of the vinyl resin particle (D) in the water based intercoat coating composition of the present invention may not be particularly limited, but may arbitrarily be selected depending on a use application.

A mixing amount of the vinyl resin particle (D) is in the range of 5 to 30% by weight, particularly 8 to 15% by weight based on a total solid content of the polyester resin (A), the blocked polyisocyanate curing agent (B) and, in the case where the water-dispersible blocked polyisocyanate curing agent (C) is used, the water-dispersible blocked polyisocyanate curing agent (C).

The water based intercoat coating composition of the present invention may be prepared by formulating the polyester resin (A), the blocked polyisocyanate curing agent (B), preferably the water-dispersible blocked polyisocyanate curing agent (C) and the vinyl resin particle (D), followed by mixing and dispersing into water.

The water based intercoat coating composition of the present invention may be water-dispersed by neutralizing the carboxyl group in the polyester resin (A) and the water-dispersible polyisocyanate curing agent (C) with a neutralizing agent.

The neutralizing agent may include, for example, hydroxides of alkali metal or alkaline earth metal such as sodium hydroxide, potassium hydroxide, lithium hydroxide, calcium hydroxide, barium hydroxide and the like; ammonia; a primary monoamine such as ethylamine, propylamine, butylamine, benzylamine, monoethanolamine, neopentanolamine, 2-aminopropanol, 3-aminopropanol and the like; a secondary monoamine such as diethylamine, diethanolamine, di-n- or di-iso-propanolamine, N-methylethanolamine, N-ethylethanolamine and the like; a tertiary monoamine such as dimethylethanolamine, trimethylamine, triethylamine, triisopropylamine, methyldiethanolamine, dimethylaminoethanol and the like; a polyamine such as diethylenetriamine, hydroxyethylaminoethylamine, ethylaminoethylamine, methylaminopropylamine and the like; and the like.

The water based intercoat coating composition of the present invention may optionally contain a hydroxyl group-containing acrylic resin, hydroxyl group-containing urethane resin, solid color pigment, metallic pigment, light-coherent pigment, extender pigment, dispersant, anti-settling agent, organic solvent, urethane-forming reaction-promoting catalyst such as an organotin compound, hydroxy group-melamine resin crosslinking reaction-promoting catalyst such as an acid catalyst, anti-foaming agent, thickening agent, anti-corrosive agent, ultraviolet light absorbent, surface controlling agent and the like.

A curing catalyst may be added for the purpose of promoting a crosslinking reaction of the coating film. The curing catalyst may include an organometallic compound such as tin octylate, dibutyltin(2-ethylhexanoate), dioctyltin-di(2-ethylhexanoate), dioctyltindiacetate, dibutyltindilaurate, dibutyltinoxide, monobutyltintrioctate, lead 2-ethylhexanoate, zinc octylate and the like.

A mixing amount of the curing catalyst may be arbitrarily selected, but is in the range of 0.005 to 5% by weight, particularly 0.01 to 3% by weight based on a total solid content of the polyester resin (A), the blocked polyisocyanate curing agent (B) and, in the case where the water-dispersible blocked polyisocyanate curing agent (C) is used, the water-dispersible blocked polyisocyanate curing agent (C).

Coating may be carried out by the known coating methods, for example, spray coating, air spray coating, airless spray coating, electrostatic coating and the like, so as to form a coating film having a thickness in the range of 10 to 100 µm, particularly 20 to 60 µm as a cured coating film. The resulting coating film may be heated at 120 to 170°C, particularly 130 to 160°C for 10 to 40 minutes so as to be crosslinked and cured.

The coating film formed by use of the water based intercoat coating composition shows excellent anti-chipping properties, and may preferably be used as a water based intercoat coating composition for use in a multi-layer coating film formed onto an automobile body or the like by forming a primer coating film, an intercoat coating film, curing or not curing, and by coating a topcoat coating composition.

At least one topcoat coating composition selected from a solid color coating composition, metallic coating composition, light-coherent coating composition, clear coating composition and the like may be coated so as to form a monolayer or multi-layer topcoating film.

A multi-layer coating film-forming method by use of the water based intercoat coating composition of the present invention is explained more in detail hereinafter.

### Coating Film-Forming Method:

The multi-layer coating film-forming method comprises coating a primer coating composition such as a cationic electrodeposition coating composition, followed by coating a water based intercoat coating composition, and coating a colored base coating composition or a clear coating composition to form monolayer or multi-layer colored base coating film or monolayer or multi-layer clear coating film, and may specifically include the following methods (a) to (c).

The method (a) may include a one coat·one bake (1C1B) method which comprises coating a primer coating composition such as a cationic electrodeposition coating composition and the like onto a metal or plastic substrate as in the automobile, followed by coating the water based intercoat coating composition of the present invention, curing, and coating a solid color topcoating composition by a coating method such as airless spray coating, air spray coating, rotary spray coating and the like so as to be a coating film thickness in the range of about 10 to 50 µm, and heat curing at about 100 to 180°C for about 10 to 90 minutes.

The method (b) may include a two coats·one bake (2C1B) coating method and a two coats·two bakes (2C2B) coating method which comprise coating a primer coating composition such as a cationic electrodeposition coating composition and the like onto a metal or plastic substrate, followed by coating the water based intercoat coating composition of the present invention, curing, coating a colored coating composition by a coating method such as an airless spray coating, air spray coating, rotary spray coating and the like so as to be a coating film thickness in the range of about 10 to 50 µm, heat curing at about 100 to 180°C for about 10 to 40 minutes, or leaving to stand at room temperature for several minutes or preheating without curing, coating a clear coating composition so as to be a cured coating film thickness in the range of about 10 to 70 µm, and heat curing at about 60 to 160°C for about 10 to 90 minutes.

The method (c) uses the same colored coating composition as that used in the method (a) and a transparent coating film-forming coating composition as a first clear coating composition, i.e. such a coating composition that almost all of the pigment is removed from the colored coating composition, and includes a three coats·one bake (3C1B) method, three coats·two bakes (3C2B) method and three coats·three bakes (3C3B) method, which comprise coating a colored coating composition, followed by coating a first clear coating composition so as to be a cured coating film thickness in the range of about 10 to 50 µm, heat curing at about 60 to 160°C for about 10 to 90 minutes, or leaving to stand at room temperature for several minutes or preheating without curing, and coating a second clear coating composition so as to be a cured coating film thickness in the range of about 10 to 70 µm, and heat curing at about 60 to 180°C for about 10 to 90 minutes.

The present invention provides the following particular effects.

According to a first embodiment of the present invention, the use of a water based intercoat coating composition containing the polyester resin (A), the blocked polyisocyanate curing agent (B), and preferably the vinyl resin particle (D) makes it possible to form a multi-layer coating film showing excellent anti-chipping properties, resulting in making it possible to form a multi-layer coating film having elasticity and capable of absorbing shocks due to collision of pebbles, gravels, etc. to the automobile body.

According to a second embodiment of the present invention, the use of the water based intercoat coating composition containing the polyester resin (A), the blocked polyisocyanate curing agent (B), the water-dispersible blocked polyisocyanate curing agent (C), and preferably the vinyl resin particle (D) makes it possible to provide a water based intercoat coating composition having high solid content, low volatile organic compound content and excellent storage stability, and provide a multi-layer coating film showing excellent properties in anti-chipping properties and water resistance.

Consequently, omissions of a chipping primer and coating steps thereof are made possible, resulting in contributing to resources-saving and step-saving.

The following 1 to 4 are reasons of the above effect.
1. Anti Chipping Properties: Improvements in coating film elasticity due to the polyester resin (A), the curing agent (B) and the curing agent (C) result excellent anti-chipping properties.
2. Low Volatile Organic Compound Content: A remarkably improved balance between hydrophilic properties and hydrophobic properties due to a combined use of respective curing agents can improve compatibility thereof with the polyester resin (A) and makes possible an optimum viscosity for coating at a high solid content, resulting in making it possible to reduce a volatile organic solvent content in the coating composition.
3. Water Resistance: Controlling of a balance between hydrophilic properties and hydrophobic properties due to the combined use of the curing agent (B) with the curing agent (C) in place of the use of the water-dispersible blocked polyisocyanate curing agent (C) only makes possible to find out an optimum formulation, resulting in making it possible to improve water resistance.
4. Coating Composition Storage Stability: Controlling a balance between hydrophilic properties and hydrophobic properties due to the combined use of the curing agent (B) with the curing agent (C) makes possible to improve storage stability of the coating composition.

### Example

The present invention is explained more in detail by the following Examples, in which "part" and "%" represent "part by weight" and "% by weight" respectively. The present invention is not limited to the Examples.

### Preparation Example of Polyester Resin No. 1

A four-necked flask equipped with a heater, stirrer, thermometer, reflux condenser and a water separator was charged with 61.9 parts of 1,3-cyclohexane dicarboxylic acid, 70.1 parts of adipic acid, 62.8 parts of trimethylolpropane, 24.2 parts of neopentyl glycol and 44.6 parts of 1,4-cyclohexane dimethanol, followed by heating the content up from 160°C to 230°C over 3 hours, keeping at 230°C for one hour, distilling off a resulting condensation water by use of a fractionating column, adding 15.0 parts of anhydrous trimellitic acid to the resulting product, desolvating, neutralizing with dimethylethanolamine, and mixing with water to obtain polyester resin No. 1 having a solid content of 40%, hydroxyl value of 150 mgKOH/g, acid value of 35 mgKOH/g and a number average molecular weight of 2,000. A mixing amount represented by part by weight is shown in Table 1.

### Preparation Example of Polyester Resin No. 2

A four-necked flask equipped with a heater, stirrer, thermometer, reflux condenser and a water separator was charged with 61.9 parts of 1,3-cyclohexane dicarboxylic acid, 70.1 parts of adipic acid, 62.8 parts of trimethylolpropane, 24.2 parts of neopentyl glycol and 44.6 parts of 1,4-cyclohexane dimethanol, followed by heating the content up from 160°C to 230°C over 3 hours, keeping at 230°C for one hour, distilling off a resulting condensation water by use of a fractionating column, adding 10.6 parts of anhydrous trimellitic acid to the resulting product, desolvating, neutralizing with dimethylethanolamine, and mixing with water to obtain polyester resin No. 2 having a solid content of 40%, hydroxyl value of 168 mgKOH/g, acid value of 25 mgKOH/g and a number average molecular weight of 2,000. A mixing amount represented by part by weight is shown in Table 1.

### Preparation Example of Polyester Resin No. 3

A four-necked flask equipped with a heater, stirrer, thermometer, reflux condenser and a water separator was charged with 43.8 parts of adipic acid, 77.0 parts of isophthalic acid, 54.6 parts of trimethylolpropane, 64.0 parts of butylethylpropanediol and 21.0 parts of neopentyl glycol, followed by reacting, adding 15.3 parts of anhydrous trimellitic acid to the reaction product, desolvating, neutralizing with dimethylethanolamine, and mixing with water to obtain polyester resin No. 3 having a solid content of 40%, hydroxyl value of 140 mgKOH/g, acid value of 35 mgKOH/g and a number average molecular weight of 2,000. A mixing amount represented by part by weight is shown in Table 1.

**Table 1**

| Polyester resin | No. 1 | No. 2 | No. 3 |
|---|---|---|---|
| 1,3-cyclohexanedicarboxylic acid | 61.9 | 61.9 | - |
| Adipic acid | 70.1 | 70.1 | 43.8 |
| Isophthalic acid | - | - | 77.0 |
| Trimethylolpropane | 62.8 | 62.8 | 54.6 |
| Butylethylpropanediol | - | - | 64.0 |
| Neopentyl glycol | 24.2 | 24.2 | 21.0 |
| 1,4-cyclohexanedimethanol | 44.6 | 44.6 | - |
| Anhydrous trimellitic acid | 15.0 | 10.6 | 15.3 |

### Preparation Example of Curing Agent No. 1

### (Preparation of Blocked Polyisocyanate Curing Agent)

To 40 parts of methylketoxime was dropped 50 parts of hexamethylene diisocyanate at 40 to 60°C, followed by heating at 80°C for one hour to obtain curing agent No. 1 having a NCO content of 16.5% by weight.

### Preparation Example of Curing Agent No. 2

### (Preparation of Water-Dispersible Blocked Polyisocyanate Curing Agent)

The following formulation was used for preparation.

| | |
|---|---|
| isocyanate 1 (Note 1) | 97.5 parts |
| isocyanate 2 (Note 2) | 65.5 parts |
| butanoneoxime | 56.6 parts |
| hydroxypivalic acid | 27.6 parts |
| dimethylaminoethanol (DMAE) | 29.7 parts |
| N-methylpyrrolidone (NMP) | 15.4 parts |

Reaction was carried out as follows.

To the mixture (average NCO functionality: about 2.6) of isocyanate 1 and isocyanate 2 was added 34.8 parts of butanoneoxime at a temperature of 80°C, followed by cooling down to 50 to 60°C, adding N-methylpyrrolidone (NMP) and hydroxypivalic acid, heating slowly the resulting mixture up to 90 to 100°C, 5 to 8 hours after the starting of the reaction subjecting to a dibutylamine titration to result a NCO content of 4.3 to 4.6%, stopping the reaction, slowly adding 21.8 parts of the remaining butanoneoxime, subjecting the resulting mixture to IR measurement until the NCO content becomes 0 (zero) with agitation at 90°C, neutralizing the resulting mixture with dimethylaminoethanol (DMAE), 10 minutes after adding 325 parts of at 60 to 70°C to the reaction mixture at 80 to 90°C and dispersing to obtain curing agent No. 2 having a solid content of 40% by weight and a NCO content of 9.6% by weight.
(Note 1) Isocyanate 1: Desmodur W (trade name, marketed by Bayer AG, 4,4'-diisocyanatodicyclohexylmethane).
(Note 2) Isocyanate 2: 1,6-diisocyanatohexane oligomer prepared from 1,6-diisocyanate hexane according to Example 1 of U.S. Patent No. 4324879.

### Example and Comparative Example

### Example 1

To a mixture of 142.5 parts (solid content 57 parts) of polyester resin No. 1 as obtained in the preparation example, 48 parts (solid content 43 parts) of curing agent No. 1, 64 parts (solid content 64 parts) of JR-806 and 0.6 part (solid content 0.6 part) of Carbon MA-100 was added 156.4 parts of deionized water to obtain water based intercoat coating composition No. 1 having a solid content of 40% of Example 1. A mixing amount represented by part by weight is shown in Table 2.

### Examples 2-4 and Comparative Examples 1-3

According to the formulations shown in Table 2, water based intercoat coating compositions No. 2 to No. 7 of Examples 2-4 and Comparative Examples 1-3 were obtained respectively. Mixing amounts represented by part by weight are shown in Table 2.

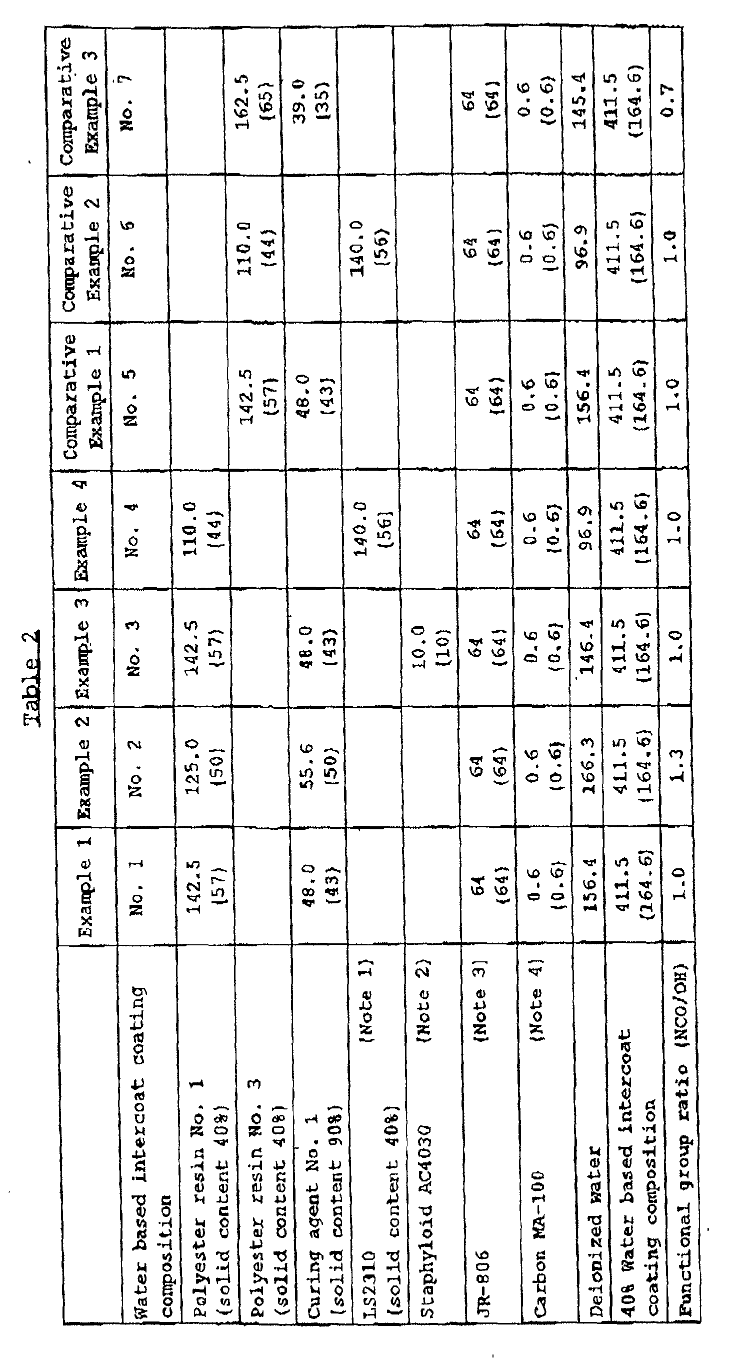

### Example 5

A mixture of 31.9 parts (solid content 28.7 parts) of curing agent No. 1 and 35.8 parts (solid content 14,3 parts) of curing agent No. 2 was prepared, followed by adding 142.5 parts (solid content 57 parts) of polyester resin No. 1 as obtained in the preparation example, 64 parts (solid content 64 parts) of JR-806 and 0.6 part (solid content 0.6 part) of Carbon MA-100, dispersing and mixing, and adding deionized water so as to be a viscosity of 50 seconds by Ford cup No. 4 to obtain water based intercoat coating composition No. 8. Mixing amounts represented by part by weight are shown in Table 3.

### Examples 6-7 and Comparative Example 4

According to the formulations as shown in Table 3, water based intercoat coating composition No. 9 to No. 11 of Examples 6-7 and Comparative Example 4 were obtained respectively. Mixing amounts represented by part by weight shown in Table 3.

**Table 3**

| | Example 5 | Example 6 | Example 7 | Comparative Example 4 |
|---|---|---|---|---|
| Water based intercoat coating composition | No. 8 | No. 9 | No. 10 | No. 11 |
| Polyester resin No. 1 (solid content 40%) | 130.0 (52.0) | 130.0 (52.0) | | |
| Polyester resin No. 2 (solid content 40%) | | | 130.0 (52.0) | |
| Polyester resin No. 3 (solid content 40%) | | | | 130.0 (52.0) |
| Curing agent No. 1 (solid content 90%) | 35.6 (32.0) | 35.6 (32.0) | 35.6 (32.0) | 35.6 (32.0) |
| Curing agent No. 2 (solid content 40%) | 40.0 (16.0) | | 40.0 (16.0) | 40.0 (16.0) |
| Desmodur TP LS2310 (Note 5) (solid content 40%) | | 40.0 (16.0) | | |
| JR-806 (Note 3) | 64 (64) | 64 (64) | 64 (64) | 64 (64) |
| Carbon MA-100 (Note 4) | 0.6 (0.6) | 0.6 (0.6) | 0.6 (0.6) | 0.6 (0.6) |
| Extender pigment (Note 6) | 30 (30) | 30 (30) | 30 (30) | 30 (30) |
| (Note 1) LS2310 (Trade name, marketed by Sumitomo Bayel Urethane Co., Ltd., blocked polyisocyanate). | | | | |
| (Note 2) Staphyloid AC4030: Trade name, marketed by Takeda Chemical Industries, Ltd., core-shell type vinyl resin particle, glass transition temperature of core moiety; -40°C, glass transition temperature of shell moiety; 110°C, particle size 500 nm. | | | | |
| (Note 3) JR-806: Trade name, marketed by Tayka Corporation, titanium white. | | | | |
| (Note 4) Carbon MA-100: Trade name, marketed by Mitsubishi Chemical Corporation, carbon black. | | | | |
| (Note 5) Desmodur TP LS2310 (Trade name, marketed by Sumitomo Bayel Urethane Co., Ltd., water-dispersible blocked polyisocyanate). | | | | |
| (Note 6) Extender pigment: Trade name, marketed by Sakai Chemical Industry Co., Ltd., barium sulfate B35. | | | | |

### Preparation of Test Panel for Coating film Performance Test

Elecron GT-10 (trade name, marketed by Kansai Paint Co., Ltd., cationic electrodeposition coating composition) was coated onto a cold rolled steel sheet treated with Palbond #3020 (trade name, marketed by Nippon Parkerizing Co., Ltd., zinc phosphate treatment) to form a coating film having a dry film thickness of 20 µm, followed by coating water based intercoat coating composition No. 1 to No. 11 (Table 4) as prepared in Examples and Comparative Examples to be a film thickness of 35 µm, beat curing at 140°C for 20 minutes, coating Magicron TB-515 (Trade name, marketed by Kansai Paint Co., Ltd., acrylic·melamine resin based coating composition) to a film thickness of 15 µm, leaving to stand at room temperature for 3 minutes, coating a clear coating composition Magicron TC-71 (Trade name, marketed by Kansai Paint Co., Ltd., acrylic·melamine resin based coating composition) to a film thickness of 35 µm, and heat curing both coating films at 140°C for 30 minutes simultaneously to obtain multi-layer coating films respectively.

### Test Results

Performance test results of the above multi-layer coating films are shown in Table 4, in which mixing amounts of respective components are represented by weight of the solid content respectively.

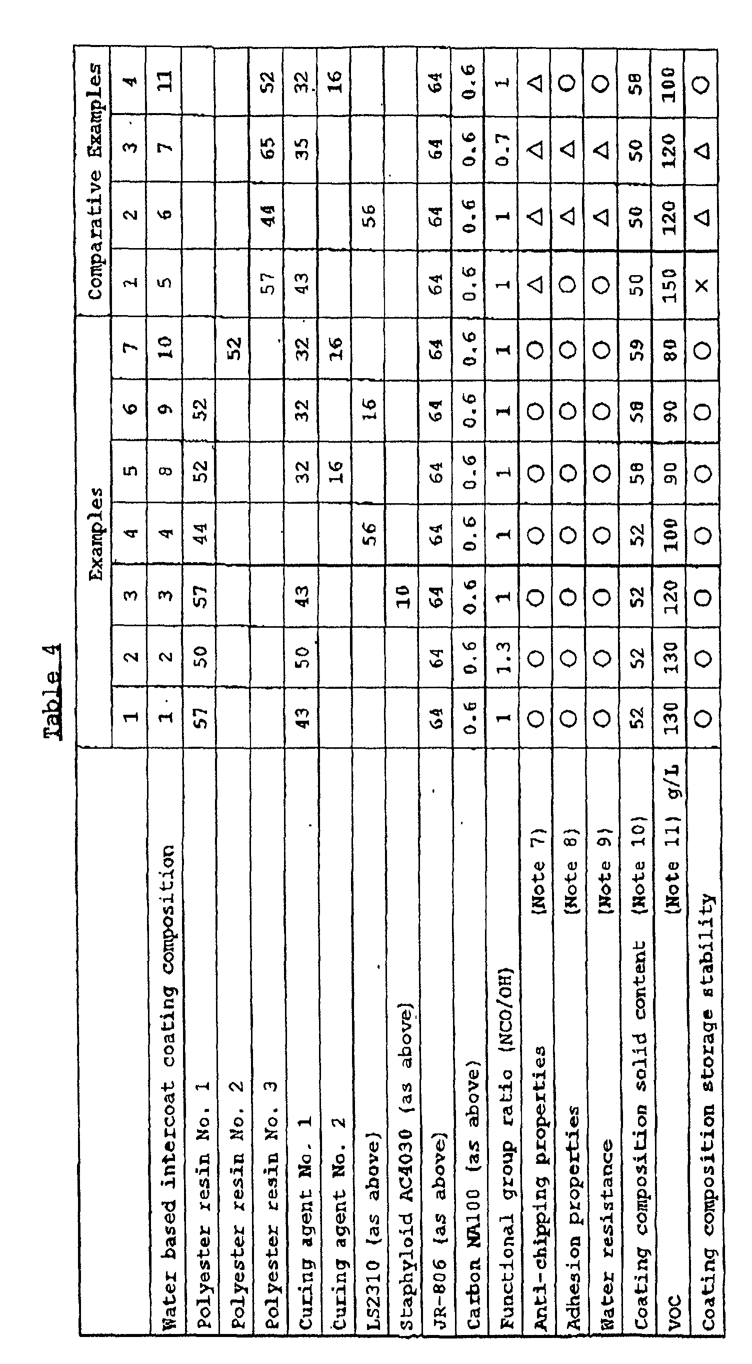

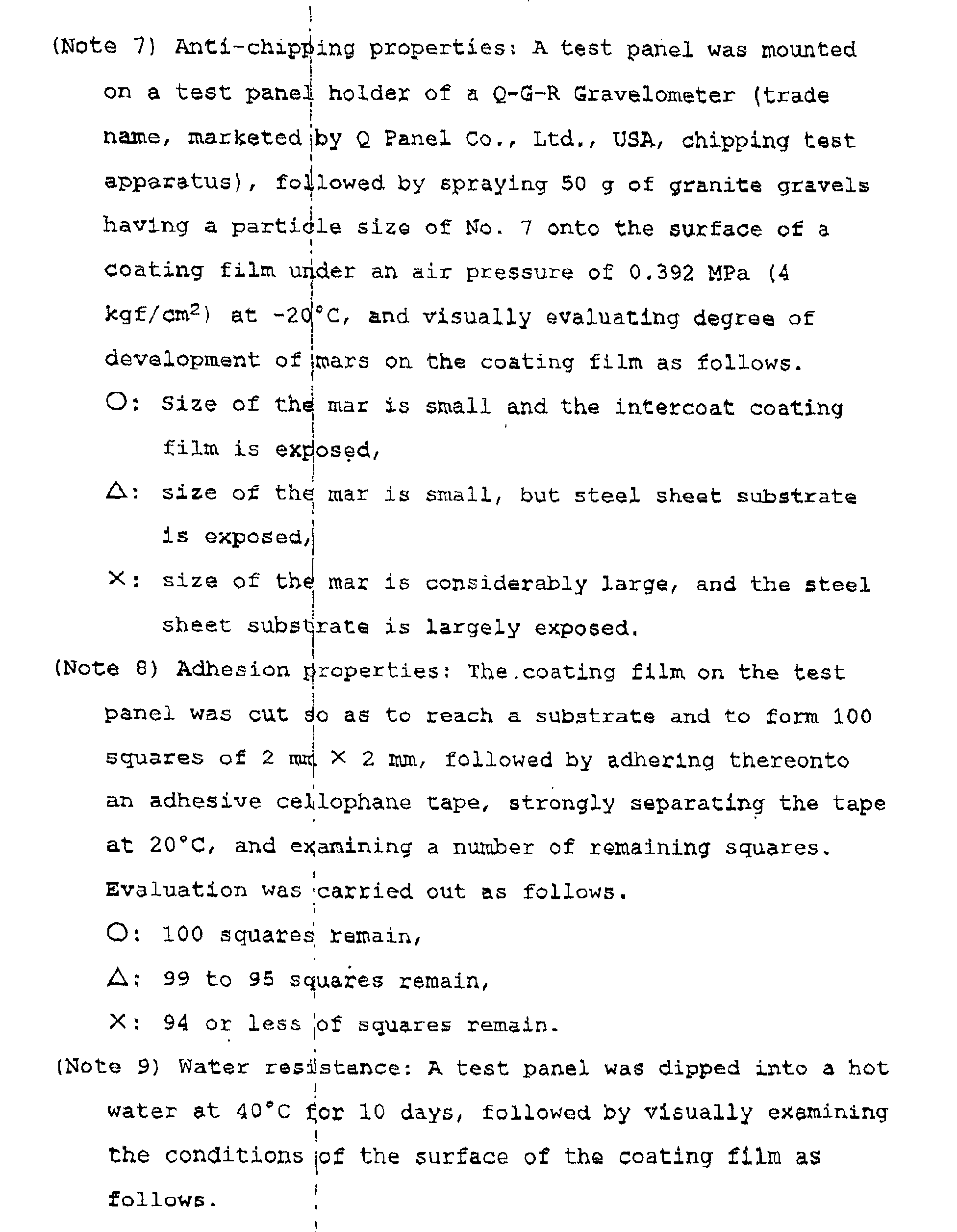

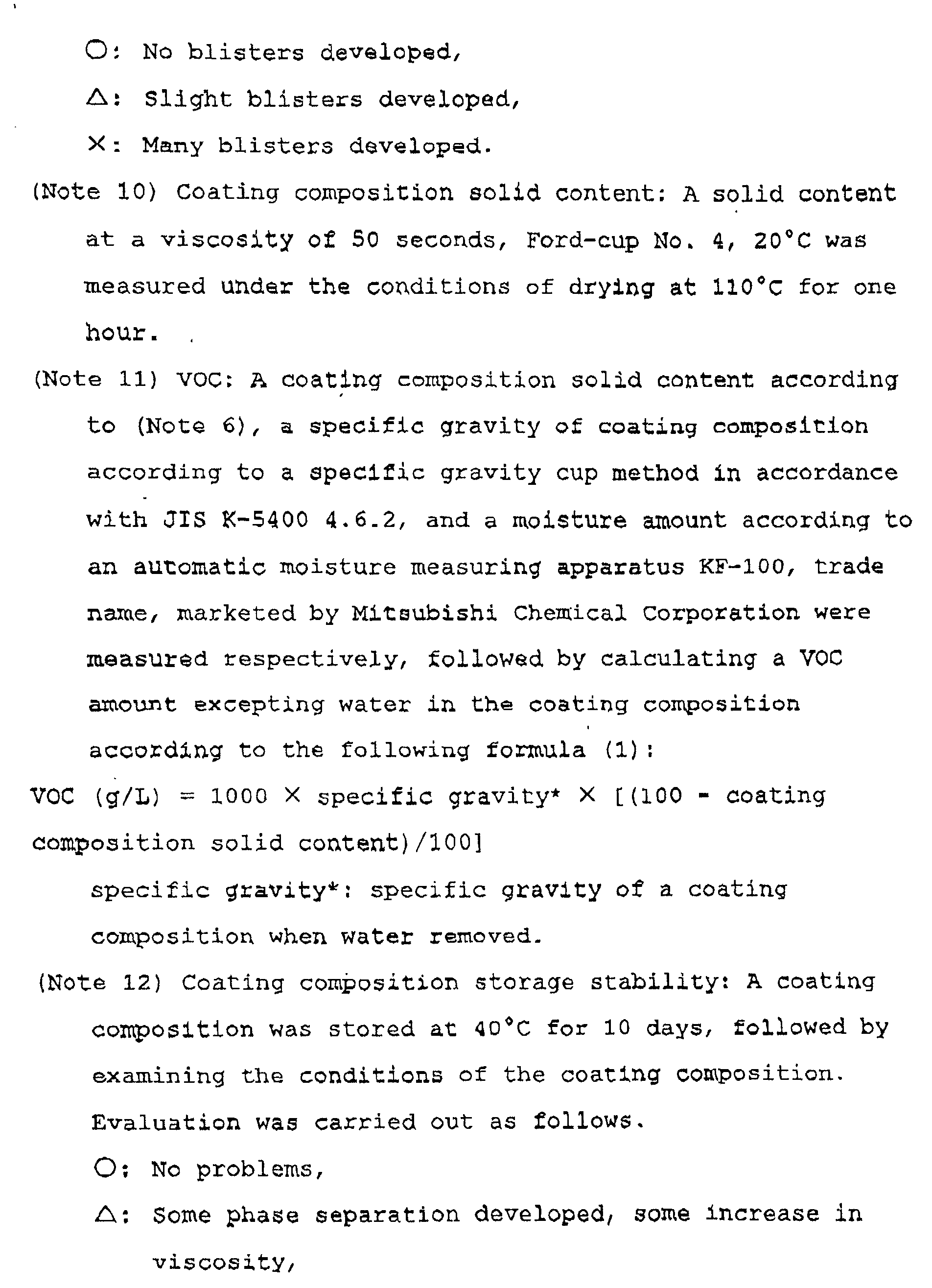

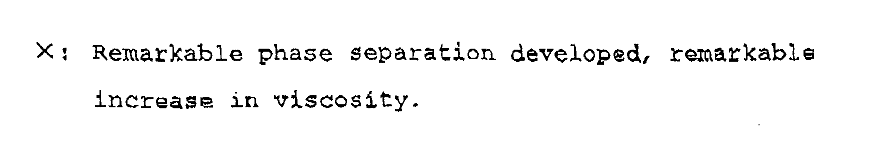

## Claims

1. A water based intercoat coating composition containing (A) a polyester resin comprising, as essential components, an alicyclic polybasic acid (a₁) and/or an alicyclic polyhydric alcohol (a₂), other polybasic acid (a₃) and other polyhydric alcohol (a₄), and (B) a blocked polyisocyanate curing agent.

2. A water based intercoat coating composition containing (A) a polyester resin comprising, as essential components, an alicyclic polybasic acid (a₁) and/or an alicyclic polybydric alcohol (a₂), other polybasic acid (a₃) and other polyhydric alcohol (a₄), (B) a blocked polyisocyanate curing agent, and (C) a water-dispersible blocked polyisocyanate curing agent.

3. A water based intercoat coating composition as claimed in claim 1 or 2, wherein a content of the alicyclic polybasic acid (a₁) and/or the alicyclic polyhydric alcohol (a₂) in the polyester resin (A) is in the range of 20 to 70% by weight based on a total solid content of the alicyclic polybasic acid (a₁) and/or the alicyclic polyhydric alcohol (a₂), the other polybasic acid (a₃) and the other polyhydric alcohol (a₄).

4. A water based intercoat coating composition as claimed in claim 1 or 3 wherein a ratio of isocyanate group in the blocked polyisocyanate curing agent (B) to hydroxyl group in the polyester resin (A) is in the range of 1.0 to 1.4.

5. A water based intercoat coating composition as claimed in claim 2 or 3 wherein a ratio of isocyanate group in the blocked polyisocyanate curing agent (B) and water-dispersible blocked polyisocyanate curing agent (C) to hydroxyl group in the polyester resin (A) is in the range of 1.0 to 1.4.

6. A water based intercoat coating composition as claimed in claim 2, 3 or 5 wherein a mixing ratio of the water-dispersible blocked polyisocyanate curing agent (C) to the blocked polyisocyanate curing agent (B) is in the range of 1:10 to 10:1.

7. A water based intercoat coating composition as claimed in any preceding claim, wherein the blocked polyisocyanate curing agent (B) is a blocked polyisocyanate obtained by blocking isocyanate group of a polyisocyanate (b₁) with a blocking agent (b₂).

8. A water based intercoat coating composition as claimed in any of claims 2, 3, 5, 6 or 7 wherein the water-dispersible blocked polyisocyanate curing agent (C) is a blocked polyisocyanate curing agent prepared by blocking isocyanate group of polyisocyanate (c₁) with a blocking agent (c₂) and hydroxymonocarboxylic acids (c₃), followed by neutralizing carboxyl group in the hydroxymonocarboxylic acids (c₃) so as to impart water-dispersibility.

9. A water based intercoat coating composition as claimed in any preceding claim wherein the polyisocyanate in the blocked polyisocyanate curing agent (B) is an aliphatic polyisocyanate or an alicyclic polyisocyanate.

10. A water based intercoat coating composition as claimed in any of claims 2, 3 or 5-9 wherein the polyisocyanate in the water-dispersible blocked polyisocyanate curing agent (C) is an aliphatic polyisocyanate or an alicyclic polyisocyanate.

11. A water based intercoat coating composition as claimed in any of claims 2, 3 or 5-10, wherein a mixing ratio of the blocked polyisocyanate curing agent (B)/the water-dispersible blocked polyisocyanate curing agent (C) is in the range of 10/1 to 1/10 based on the weight of the solid content.

12. A water based intercoat coating composition as claimed in any preceding claim wherein a vinyl resin particle (D) having different glass transition temperatures between a core moiety and a shell moiety is contained in an amount of 5 to 30% by weight based on a total solid content of the polyester resin (A), the blocked polyisocyanate curing agent (B) and, if present, the water-dispersible blocked polyisocyanate curing agent (C).

13. A multi-layer coating film-forming method which comprises successively coating a cationic electrodeposition coating composition onto a substrate, coating a water based intercoat coating composition as claimed in any one of claims 1 to 12, curing or not curing, and coating a topcoating composition to form at least one topcoat coating film layer.
